# EUROPEAN PATENT APPLICATION

(11) **EP 3 540 595 A1**
(43) Date of publication of application: **18.09.2019**
(21) Application number: 19156566.2
(22) Date of filing: 12.02.2019
(51) Int. Cl.: G06F 8/65, G06F 8/61, G06F 9/00

(54) **VEHICLE CONTROL DEVICE**

(30) Priority: 12.03.2018 JP 2018044234
(71) Applicant: TOYOTA JIDOSHA KABUSHIKI KAISHA, Toyota-shi Aichi-ken, 471-8571 (JP)
(72) Inventor: NINAGAWA, Yuji, Toyota-shi, Aichi-ken,, 471-8571 (JP)
(74) Representative: Kuhnen & Wacker Patent- und Rechtsanwaltsbüro PartG mbB

(57) **Abstract**

A vehicle control device installed in a vehicle and having a gateway function of relaying data communication among a plurality of ECUs connected via an in-vehicle network and data communication between the plurality of ECUs and an external device, which is a device outside the vehicle. The vehicle control device includes: an application execution section configured to execute an application for realizing a predetermined function; and an application management section configured to manage obtainment and erasure of a specific application which is a part of the application. The application management section flexibly adds or deletes a predetermined function by obtaining or erasing the specific application.

## Description

### BACKGROUND OF THE INVENTION

### Field of the Invention

The present invention relates to a vehicle control device.

### Description of the Background Art

Patent Literature 1 (Japanese Laid-Open Patent Publication No. 2010-191786) and Patent Literature 2 (Japanese Laid-Open Patent Publication No. 2003-046536) each disclose a vehicle control device capable of obtaining an update program from a server to update a program of a target apparatus.

When a new function not installed in a vehicle is to be added to the vehicle, or when an existing function installed in a vehicle is to be deleted, it is necessary to update a program of an electronic control unit (ECU) that is the target for the processing.

However, in a case of a vehicle having several tens of ECUs installed therein, if individual ECU programs are updated every time functions are changed due to additions or deletions, such update requires not only a lot of time and work but also causes increase in the number of article numbers in combinations of genuine ECUs, which results in difficult management. Therefore, there is room for further improvement with respect to update of ECU programs when functions are changed.

### SUMMARY OF THE INVENTION

The present invention has been made in view of the above problem. An object of the present invention is to provide a vehicle control device that can perform addition of new functions or deletion of existing functions with respect to a vehicle, without updating ECU programs.

In order to solve the above problem, one mode of the present invention is a vehicle control device installed in a vehicle and having a gateway function of relaying data communication among a plurality of ECUs connected via an in-vehicle network and data communication between the plurality of ECUs and an external device, which is a device outside the vehicle. The vehicle control device includes: an application execution section configured to execute an application for realizing a predetermined function; and an application management section configured to manage obtainment and erasure of a specific application which is a part of the application. The application management section flexibly adds or deletes a predetermined function by obtaining or erasing the specific application.

In this mode, the vehicle control device having a gateway function is provided with: a function for causing an application to be executed; and a function of managing obtainment and erasure of a specific application. With these functions, it becomes possible to obtain and erase as desired an application that is executed by the device. Thus, addition of a new function and deletion of an existing function can be performed with respect to the vehicle, without updating the program of the ECU.

In this mode, on the basis of the function added by the application management section, the application execution section can send out, into the in-vehicle network, data for causing a predetermined ECU to perform predetermined vehicle control.

In the vehicle control device according to this mode, a predetermined ECU can be caused, without modifying the presently-used ECU program, to perform a new operation or process for performing predetermined vehicle control.

In this mode, on the basis of the function added by the application management section, the application execution section can collect, from among a plurality of pieces of data sent out from the plurality of ECUs into the in-vehicle network, predetermined data and can transmit the collected predetermined data to the external device.

In this case, on the basis of the function added by the application management section, the application execution section may receive a calculation result of the collected data from the external device, and may send out, into the in-vehicle network, data for causing the calculation result to be reflected in predetermined vehicle control to be performed by a predetermined ECU.

In the vehicle control device of this mode, the external device can collect, as a new collection target, data that has not been the collection target for the external device in the original setting. If the result calculated from the data collected by the external device is returned to the vehicle control device side, the calculation result can be reflected in the vehicle control performed by a desired ECU.

In this mode, on the basis of the function added by the application management section, the application execution section can collect, from among a plurality of pieces of data sent out from the plurality of ECUs into the in-vehicle network, predetermined data and can store the collected predetermined data into a predetermined storage region.

In the vehicle control device according to this mode, the vehicle can record, as a new recording target, diagnosis data which has not been the recording target for the vehicle in the original setting.

According to the vehicle control device of the present invention, addition of a new function or deletion of an existing function can be performed with respect to the vehicle, without updating the ECU program.

These and other objects, features, aspects, and advantages of the present invention will become apparent from the following detailed description of the present invention when taken in conjunction with the accompanying drawings.

### BRIEF DESCRIPTION OF THE DRAWINGS

FIG. 1 is a diagram showing a schematic configuration of an on-vehicle network system including a vehicle control device according to one embodiment of the present invention;
FIG. 2 is a diagram describing one example of control performed by the vehicle control device on the basis of a function added by a specific application;
FIG. 3 is a diagram describing one example of control performed by the vehicle control device on the basis of a function added by a specific application;
FIG. 4 is a diagram describing one example of control performed by the vehicle control device on the basis of a function added by a specific application; and
FIG. 5 is a diagram describing one example of control performed by the vehicle control device on the basis of a function added by a specific application.

### DESCRIPTION OF THE PREFERRED EMBODIMENTS

### [Outline]

According to the present invention, a vehicle control device having a gateway function of relaying data communication among a plurality of ECUs and data communication between the plurality of ECUs and a device outside the vehicle (hereinafter, also simply referred to as an "external device") is provided with a function of causing an application to be executed and a function capable of obtaining and erasing an application as desired, whereby addition of a new function or deletion of an existing function is performed with respect to the vehicle, without updating a program of an ECU.

### [Configuration]

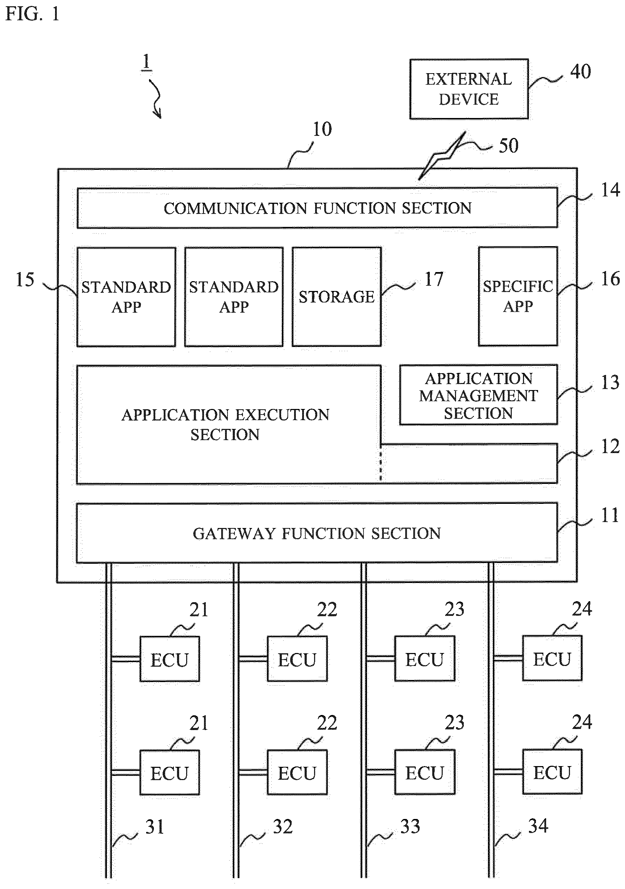

FIG. 1 shows a schematic configuration of an on-vehicle network system 1 including a vehicle control device 10 according to one embodiment of the present invention. The on-vehicle network system 1 shown in FIG. 1 includes: the vehicle control device 10; a plurality of ECUs 21 to 24; and a plurality of communication buses 31 to 34. The on-vehicle network system 1 is connected to an external device 40 via an external network 50.

The plurality of ECUs 21 to 24 are various electronic control units installed in the vehicle. The plurality of ECUs 21 to 24 are connected to communication buses 31 to 34 which correspond to the systems (control system, body system, safety system, information system, and the like) to which the plurality of ECUs 21 to 24 belong, whereby the plurality of ECUs 21 to 24 form in-vehicle networks, respectively.

Each of the plurality of communication buses 31 to 34 is a network bus according to a CAN (Controller Area Network) communication method, for example. The communication bus 31 communicably connects one or more ECUs 21 to the vehicle control device 10, the communication bus 32 communicably connects one or more ECUs 22 to the vehicle control device 10, the communication bus 33 communicably connects one or more ECUs 23 to the vehicle control device 10, and the communication bus 34 communicably connects one or more ECUs 24 to the vehicle control device 10.

The external device 40 is, for example, a facility apparatus provided outside the vehicle. The external device 40 can collect data from the ECUs 21 to 24 and the vehicle control device 10 and can provide instructions and information to the ECUs 21 to 24 and the vehicle control device 10, by performing predetermined communication (IP communication, or the like) with the vehicle control device 10 via the external network 50. The external network 50 is the Internet or a telephone network, for example.

The vehicle control device 10 is configured to be able to relay communication performed in the on-vehicle network system 1. The vehicle control device 10 is configured to be able to flexibly add or delete predetermined functions. The vehicle control device 10 includes a gateway function section 11, an application execution section 12, an application management section 13, and a communication function section 14. The vehicle control device 10 may include a storage 17 which is a region where predetermined information is stored.

The gateway function section 11 connects the plurality of communication buses 31 to 34 and can relay data communication among the plurality of ECUs 21 to 24. In addition, the gateway function section 11 can relay data communication performed between the ECUs 21 to 24 in the vehicle and the external device 40, via the communication function section 14. The gateway function section 11 is implemented as a microcomputer having a CAN function installed therein, for example.

The application execution section 12 can execute various types of applications that the vehicle control device 10 has. The application execution section 12 is implemented as an application platform including a microcomputer, middleware, a driver, and the like.

The applications that the vehicle control device 10 has are divided into two categories: an application (hereinafter, referred to as "standard application") 15 which is held in advance by the vehicle control device 10 and which is unable to be erased from the vehicle control device 10; and an application (hereinafter, referred to as "specific application") 16 which can be obtained into the vehicle control device 10 and which can be erased from the vehicle control device 10. Examples of the applications include: a bundle that operates on an OSGi (Open Services Gateway initiative) framework on a Java virtual machine; an applet that operates on a Java virtual machine; Java Script that operates on a browser; and Lua script that operates on a Lua script engine. Those applications are commands and data for causing the vehicle control device 10 to realize predetermined functions.

The application management section 13 can manage obtainment and erasure of the specific application 16. More specifically, the application management section 13 newly obtains, as the specific application 16, an application that can realize a predetermined function that cannot be realized by the standard application 15, whereby the application management section 13 adds the predetermined function to the vehicle. The specific application 16 may be wirelessly obtained via the external network 50 from the external device 40, or may be obtained via a service tool (not shown) or the like that is in wired connection to the vehicle. When the specific application 16 is to be obtained from the external device 40, the application management section 13 may obtain the specific application 16 in response to reception of a predetermined instruction from the external device 40, or by inquiring to the external device 40 on a periodic or non-periodic basis. The application management section 13 erases the specific application 16 that has been obtained, whereby the application management section 13 deletes the function that has been realized by the erased application, from the vehicle. It should be noted that the application execution section 12 and the application management section 13 can be implemented at least partially by the above-mentioned virtual machine, browser, or the like, for example.

On the basis of the function realized by the standard application 15 or the specific application 16, the communication function section 14 performs predetermined communication with the external device 40 via the external network 50, thereby being able to transmit collected data to the external device 40 or receive a collection condition, a control instruction, or information from the external device 40. For the communication between the external device 40 and the vehicle control device 10, a navigation device or a data communication module (DCM) installed in the vehicle may be used instead of the communication function section 14.

The number of applications (the standard application 15, the specific application 16), the number of communication buses 31 to 34, and the number of ECUs 21 to 24 shown in the on-vehicle network system 1 described above are examples, and numbers other than those shown in the drawing may be employed.

### [Example of addition of function]

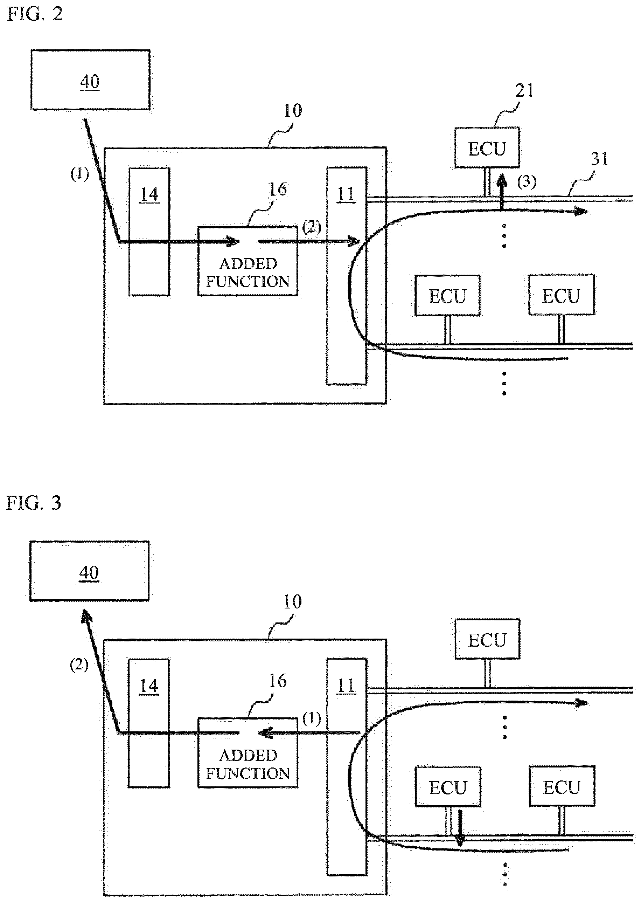

Next, with reference to FIG. 2 to FIG. 5, control performed by the vehicle control device 10 according to one embodiment of the present invention is described. Each of FIG. 2 to FIG. 5 is a diagram for describing one example of control performed by the vehicle control device 10 on the basis of the function newly added by the specific application 16. In the description below, it is assumed that the specific application 16 has already been obtained by the application management section 13 from the external device 40 via the external network 50.

### A. Function of controlling the data flowing in communication buses so as to be reflected in vehicle control (FIG. 2)

(1) When a predetermined condition has been established, the external device 40 transmits a predetermined instruction to the vehicle control device 10.
(2) Upon receiving the predetermined instruction from the external device 40, the vehicle control device 10 newly generates CAN data in accordance with the instruction and causes the CAN data to flow into a communication bus 31 (or modifies CAN data that is already flowing), on the basis of the added function.
(3) An ECU 21 as the destination of this CAN data performs predetermined vehicle control on the basis of the presently-used program.

As one example, a case is considered in which: an existing system for locking/unlocking a trunk of a vehicle through remote control is used in a new service of door-to-door delivery for a vehicle. In this case, a function of causing CAN data for unlocking the trunk of the vehicle, to flow into the communication bus 31 upon receiving a trunk unlocking instruction from the external device 40 is added in the vehicle control device 10 in advance by the specific application 16.

As a specific process, when the external device 40 has received a notice from a door-to-door delivery person indicating that the door-to-door delivery person has come near the vehicle (a predetermined condition has been established), the external device 40 transmits a trunk unlocking instruction to the vehicle control device 10. In response to the trunk unlocking instruction from the external device 40, the vehicle control device 10 causes CAN data that instructs unlocking of the trunk, to flow into the communication bus 31. When the ECU 21 has received this CAN data, the ECU 21 unlocks the trunk. The series of these processes allows baggage to be delivered to the trunk of the vehicle of a user.

A function may be added in which, when CAN data that indicates trunk closure has flowed in the communication bus 31, the vehicle control device 10 causes CAN data that instructs locking of the trunk, to flow into the communication bus 31. Instead of reception of the trunk unlocking instruction from the external device 40, but upon detection of CAN data having been generated on the basis of a predetermined vehicle operation performed by the door-to-door delivery person, the vehicle control device 10 may cause CAN data that instructs unlocking of the trunk, to flow into the communication bus 31.

As a result of the addition of the function, a desired ECU can be caused to perform, without modifying the presently-used ECU program, a new operation or process that has not been performed in the original setting. Accordingly, for example, it also becomes possible to provide a new service to a specific user (a part of target vehicles), without targeting all the users (all target vehicles).

### B. Function that allows the external device to collect data of the vehicle (FIG. 3)

(1) On the basis of the added function, the vehicle control device 10 selects and collects predetermined data from CAN data flowing in the communication bus, in accordance with a condition specified by the function.
(2) The vehicle control device 10 transmits the collected data to the external device 40.

As a specific example, when a required value of the control current required by a predetermined ECU has increased to a predetermined value or greater, the vehicle control device 10 collects all data, without being thinned, for several seconds before and after the timing of the increase of the required value, and transmits the collected data to the external device 40. The external device 40 analyzes the collected data to be utilized in control in the future. Alternatively, while the vehicle is traveling in a predetermined place, the vehicle control device 10 collects information (e.g., information about objects) recognized by various types of sensors, and transmits the collected information to the external device 40. The external device 40 analyzes the collected information and utilizes the result in updating of map information. The series of these processes enable the external device 40 to collect data and information that have not been able to be collected.

As a result of the addition of the function, data can be collected effectively and without waste by the external device 40 while the communication cost and the necessary data storage capacity are suppressed. The vehicle control device 10 may convert the collected data into data in a predetermined common format, and transmit the resultant data to the external device 40. Accordingly, the external device 40 can collect, as data in a common format, data that is different for each vehicle type or each vehicle due to the difference in installed sensors, systems, and the like. Converting data into a common format not only eliminates the need of performing individual processing on data in the external device 40, but also allows data of various vehicles already sold, to be in the same format. Thus, usability of the collected data is enhanced.

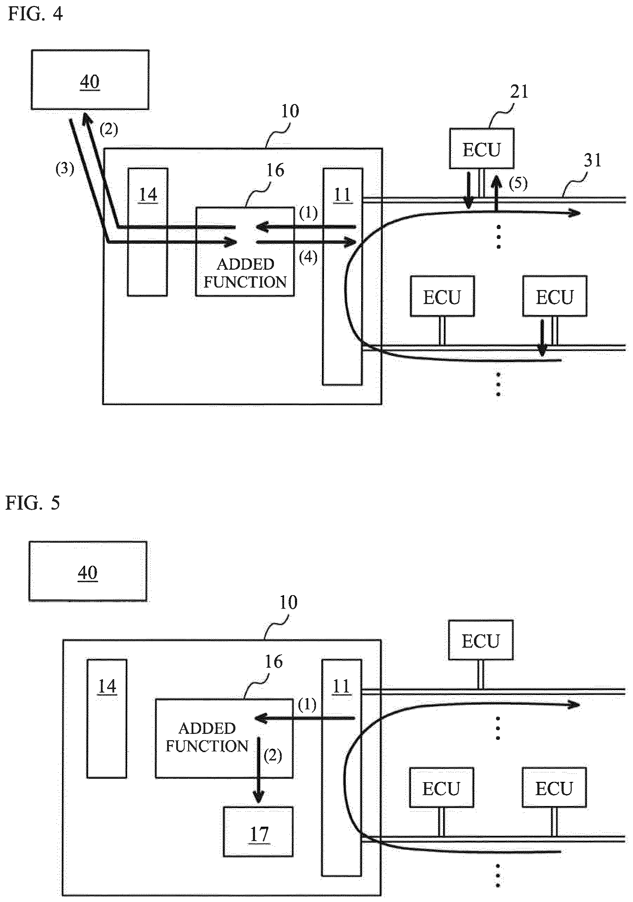

### C. Function that allows the external device to obtain data from the vehicle and perform calculation on the data, and that allows the result of the calculation to be reflected in vehicle control (FIG. 4)

(1) On the basis of the added function, the vehicle control device 10 receives predetermined CAN data from an ECU 21 as the control target.
(2) The vehicle control device 10 transmits, to the external device 40, a signal having added thereto the information necessary for the CAN data received from the ECU 21.
(3) The external device 40 performs predetermined calculation on the basis of the signal received from the vehicle control device 10, and sends back the result of the calculation to the vehicle control device 10.
(4) The vehicle control device 10 transmits CAN data based on the calculation result received from the external device 40, to the ECU 21 via the communication bus 31.
(5) The ECU 21 having received the CAN data performs a process reflecting the calculation result on the basis of the presently-used program.

As one example, a case is assumed in which a specific control amount in a vehicle (for example, EFI control amount) is changed on the basis of the present position of the vehicle, control history of another vehicle, or the like. In this case, a function of: transmitting, to the external device 40, a control amount obtained from the ECU 21; and transmitting, to the ECU 21, a target control amount received in response from the external device 40 is added in advance in the vehicle control device 10 by the specific application 16.

As a specific process, the vehicle control device 10 obtains CAN data such as a control amount, a sensor value, or the like sent out from the ECU 21 or the like to the communication bus 31. Then, the vehicle control device 10 transmits to the external device 40 a signal in which information such as position information (altitude), vehicle information, driver information, or the like is added to the obtained control amount or sensor value. The external device 40 performs predetermined calculation such as a statistical process, on the basis of the signal received from the vehicle control device 10, and transmits the result of the calculation to the vehicle control device 10. The vehicle control device 10 calculates a recommended target control amount on the basis of the calculation result received from the external device 40, and causes CAN data that instructs the target control amount to the ECU 21 as the control target, to flow into the communication bus 31. The ECU 21 that has received this CAN data controls the control amount.

As a result of the addition of the function, the specific application 16 is caused to bridge the communication between the ECU and the external device 40. Accordingly, the ECU as the control target can be caused to perform, without modifying the presently-used ECU program, a new operation or process of performing vehicle control which has not been included in the original setting.

### D. Function of collecting diagnosis data of the vehicle and storing the same in the storage (FIG. 5)

(1) On the basis of the added function, the vehicle control device 10 collects predetermined data from CAN data flowing in the communication bus.
(2) The vehicle control device 10 records the collected data into the predetermined storage 17.

As a specific example, in addition to diagnosis data that has been recorded, the vehicle control device 10 collects information regarding a specific vehicle state, and records the information in association with the diagnosis data, into the storage 17. As a result of the addition of the function, only necessary information can be collected in accordance with individual vehicle states, and thus, diagnosis data can be effectively recorded without waste.

### [Effects of the present embodiment]

As described above, the vehicle control device 10 according to one embodiment of the present invention includes the application execution section 12 which executes applications, and the application management section 13 which manages obtainment and erasure of the specific application 16, in addition to the gateway function section 11 which relays data communication between the plurality of ECUs 21 to 24 and the external device 40.

According to this configuration, in the vehicle control device 10, it becomes possible to obtain and erase as desired applications that are executed by the application execution section 12. Accordingly, with respect to new functions, services, and the like corresponding to customer needs that occur after the vehicle has been sold, addition of a new function and deletion of an existing function can be flexibly and quickly performed with respect to the vehicle, without updating programs of the plurality of ECUs 21 to 24.

According to the vehicle control device 10 of the present embodiment, on the basis of the function added by the application management section 13, predetermined CAN data can be sent out into communication bus, and an ECU that has received this CAN data can be caused to perform predetermined vehicle control. Accordingly, a desired ECU can be caused to perform, without modifying the presently-used ECU program, a new operation or process of performing vehicle control that has not been performed in the original setting.

According to the vehicle control device 10 of the present embodiment, on the basis of the function added by the application management section 13, predetermined CAN data, from among a plurality of pieces of CAN data flowing in the communication bus, can be collected and transmitted to the external device 40. Accordingly, the external device 40 can collect, as a new collection target, data that has not been the collection target for the external device 40 in the original setting.

According to the vehicle control device 10 of the present embodiment, a calculation result of collected CAN data can be received from the external device 40, CAN data based on this calculation result can be caused to flow in the communication bus, and the ECU that has received this CAN data can reflect the calculation result in the vehicle control that the ECU performs. Accordingly, if the result calculated from the data collected by the external device 40 is returned to the vehicle control device 10 side, the calculation result can be reflected in the vehicle control performed by a desired ECU.

According to the vehicle control device 10 of the present embodiment, on the function added by the application management section 13, predetermined CAN data, from among a plurality of pieces of CAN data flowing in the communication bus, can be collected and stored in the storage 17 managed by the application management section 13. Accordingly, the vehicle can record, as a new recording target, diagnosis data which has not been the recording target for the vehicle in the original setting.

As described above, according to the present invention, by providing the vehicle control device having a gateway function with a function of obtaining an application as desired and executing the application, it is possible to cause various controls to be easily performed by use of the existing function of an ECU, without updating the program of the ECU or adding a memory for the ECU. Accordingly, control that has not been integrated in the system at the time of installation of the vehicle such as: control of causing an ECU to execute a function that corresponds to a new service; or collecting information interesting for the vehicle, in an appropriate format that facilitates utilization of the information as, for example, big data which is highly usable, can be added as desired simply by obtaining an application even after the construction of the system. Thus, the degree of freedom of the system is increased.

While the present invention has been described in detail, the foregoing description is in all aspects illustrative and not restrictive. It is understood that numerous other modifications and variations can be devised without departing from the scope of the present invention.

## Claims

1. A vehicle control device (10) installed in a vehicle and having a gateway function (11) of relaying data communication among a plurality of ECUs (21-24) connected via an in-vehicle network (31-34) and data communication between the plurality of ECUs (21-24) and an external device (40), which is a device outside the vehicle,
the vehicle control device (10) comprising:
an application execution section (12) configured to execute an application for realizing a predetermined function; and
an application management section (13) configured to manage obtainment and erasure of a specific application (16) which is a part of the application (15, 16), wherein
the application management section (13) flexibly adds or deletes a predetermined function by obtaining or erasing the specific application (16).

2. The vehicle control device (10) according to claim 1, wherein
on the basis of the function added by the application management section (13), the application execution section (12) sends out, into the in-vehicle network (31-34), data for causing a predetermined ECU to perform predetermined vehicle control.

3. The vehicle control device (10) according to claim 1, wherein
on the basis of the function added by the application management section (13), the application execution section (12) collects, from among a plurality of pieces of data sent out from the plurality of ECUs (21-24) into the in-vehicle network (31-34), predetermined data and transmits the collected predetermined data to the external device (40).

4. The vehicle control device (10) according to claim 3, wherein
on the basis of the function added by the application management section (13), the application execution section (12) receives a calculation result of the collected data from the external device (40), and sends out, into the in-vehicle network (31-34), data for causing the calculation result to be reflected in predetermined vehicle control to be performed by a predetermined ECU.

5. The vehicle control device (10) according to claim 1, wherein
on the basis of the function added by the application management section (13), the application execution section (12) collects, from among a plurality of pieces of data sent out from the plurality of ECUs (21-24) into the in-vehicle network (31-34), predetermined data, and stores the collected predetermined data into a predetermined storage region (17).
